# EUROPÄISCHE PATENTANMELDUNG

(11) **EP 1 493 489 A1**
(43) Veröffentlichungstag der Anmeldung: **05.01.2005**
(21) Anmeldenummer: 04102861.4
(22) Anmeldetag: 22.06.2004
(51) Int. Cl.: B04C 3/04

(54) **Zyklonabscheidevorrichtung**

(30) Priorität: 04.07.2003 DE 10330296
(71) Anmelder: MANN+HUMMEL GmbH, 71638 Ludwigsburg (DE)
(72) Erfinder: Greif, Volker, 67376, Harthausen (DE); Kissel, Günther, 67435, Neustadt (DE); Zink, Jan, 68519, Viernheim (DE)

(57) **Zusammenfassung**

Die Erfindung betrifft eine Abscheidevorrichtung insbesondere zur Abscheidung von Partikeln aus einem Luftstrom. Diese umfasst eine erste Stufe mit wenigstens einem Fliehkraftabscheider, durch welchen das Fluid entlang einem ersten Axialweg einströmt. Der Fliehkraftabscheider besitzt einen Leitapparat zur Erzeugung einer Drallbewegung des Fluids, wobei der ersten Stufe unmittelbar eine zweite Stufe nachgeordet ist, welche ein im wesentlichen zylindrisches Gehäuse aufweist. Im Bereich des Fluidaustritts ist ein Staubaustrag vorgesehen, sowie ein konzentrisch angeordnetes und kegelstumpfförmiges Mittelrohr.

## Beschreibung

### Stand der Technik

Die Erfindung betrifft eine Abscheidevorrichtung gemäß dem Oberbegriff des unabhängigen Anspruchs 1.

Eine Abscheidevorrichtung in Form einer Trägheitsabscheidevorrichtung entfernt Partikel aus einem durch die Vorrichtung strömenden Fluid.

Solche Vorrichtungen können bei Ansaugsystemen von Motoren aller Art verwendet werden, wie zum Beispiel bei Motoren für militärische Zwecke oder bei Motoren für Geländefahrzeuge. Die Motoren können Benzinmotoren oder Dieselmotoren sein.

Bei dieser Anwendung ist das Fluid Luft und die Partikel sind Staub und andere Materialien wie beispielsweise Sand oder Grobsand.

Die Abscheidevorrichtung hat die Aufgabe, solche Partikel in einer ersten Stufe aus der Luft zu entfernen.

Aus dem DE-Gebrauchsmuster 29801034 ist eine Abscheidevorrichtung bekannt. Diese umfasst eine erste Stufe mit einer Mehrzahl an Fliehkraftabscheidern, durch welche ein Fluid entlang einem ersten Axialweg strömt und eine zweite Stufe, abströmseitig der ersten Stufe, mit einer Mehrzahl an Fliehkraftabscheidern, durch welche ein Fluid entlang eines zweiten Axialweges strömt.

Jeder der Abscheider der ersten und der zweiten Stufe, weist einen Durchgang mit einem Durchmesser auf, wobei die Axialwege der ersten Stufe gegen die Axialwege der zweiten Stufe versetzt sind.

Ein Nachteil dieser Einrichtung ist darin zu sehen, dass der Aufbau konstruktiv aufwendig gestaltet ist und eine Vielzahl von Einzelkomponenten benötigt.

Der Erfindung liegt die Aufgabe zugrunde, die genannten Nachteile zu vermeiden und einen Abscheider, insbesondere für Partikel aus einem Luftstrom zu schaffen, welcher einen hohen Wirkungsgrad besitzt und kostengünstig aufgebaut werden kann.

Diese Aufgabe wird ausgehend von dem Oberbegriff des unabhängigen Anspruchs 1 durch dessen kennzeichnende Merkmale gelöst.

### Vorteile der Erfindung

Der wesentliche Vorteil der Erfindung liegt darin, dass die Abscheidevorrichtung aus wenigen Bauteilen besteht, einen hohen Wirkungsgrad besitzt und einfach aufgebaut ist. Es hat sich gezeigt, dass ein einziger Leitapparat ausreicht um in einer ersten Abscheidestufe Partikel aus dem Luftstrom abzuscheiden und in einer nachgeschalteten zweiten Stufe ohne zusätzlichen Leitapparat Restpartikel aus dem Luftstrom zu entfernen.

Ein weiterer Vorteil dieses Aufbaus ist darin zu sehen, dass besonders Partikel, welche eine bestimmte Korngröße aufweisen und eventuell von Wänden des Abscheiders abprallen und dann vom Luftstrom mitgerissen werden, durch die zweistufige Abscheidung, welche keinen zwischengeschalteten Leitapparat besitzt, zwischen den zwei Abscheidestufen kinetische Energie verlieren und in der zweiten Stufe ausgetragen werden können.

Gemäß einer vorteilhaften Weiterbildung der Erfindung, erstreckt sich die zweite Stufe mit ihrer Eintrittsseite zumindest teilweise bis in die erste Stufe. Dies bedeutet, dass die Elemente ineinander gesteckt werden können und eine sehr kompakte Bauweise erzielbar ist.

Eine weitere Ausgestaltung der Erfindung verwendet in der zweiten Stufe einen Kegeleinsatz, dieser kann den Abscheidegrad noch weiter verbessern. Der Kegeleinsatz leitet gezielt die Partikel nach außen und dient zur Unterstützung des Staubaustrags.

Eine weitere Ausgestaltung der Erfindung sieht vor, einen Auffangbehälter für beide Stufen vorzusehen. Dies bedeutet, dass das Gesamtsystem in einem Gehäuse angeordnet ist und sich die ausgetragenen Partikel in dem Gehäuse sammeln können.

Gemäß einer Weiterbildung der Erfindung sind mehrere Fliehkraftabscheider in einem Array angeordnet. Dieses Array ist ein rechteckförmiges Gehäuse an dessen Stirnseite die Eintrittsöffnungen zum Zuführen des Luftstomes und an dessen gegenüberliegender Stirnseite die Austrittsöffnungen für den gereinigten Luftstrom vorgesehen sind. Der Abstand zwischen den beiden Stirnseiten ist durch die Abscheidvorrichtungen ausgefüllt. Eine Anwendung findet die Abscheidevorrichtung bevorzugterweise bei der Zuführung der Ansaugluft für eine Brennkraftmaschine. Gerade bei Betrieb einer Brennkraftmaschine in staubreichen Gebieten bewährt sich eine solche Vorrichtung zum Abscheiden von Schmutz- oder Staubpartikeln.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: eine Abscheidevorrichtung in einer schematischen Darstellung,
- Figur 2: die Variante einer Abscheidevorrichtung und
- Figur 3a und 3b: ein Abscheidesystem in einer Schnittdarstellung und einer Draufsicht.

### Beschreibung der Ausführungsbeispiele

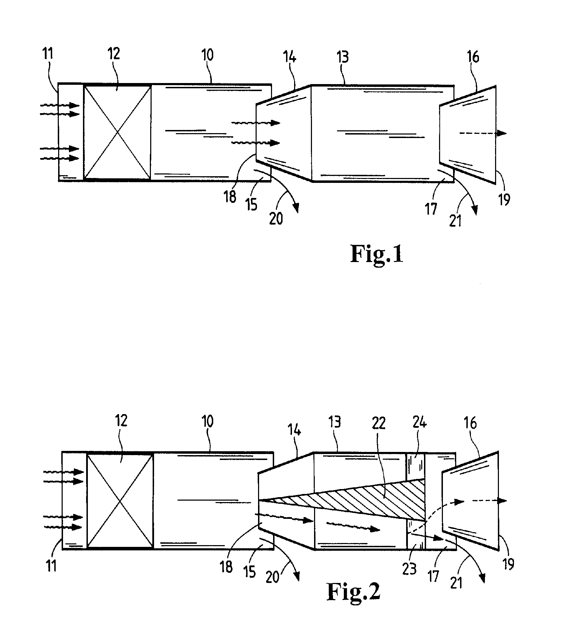

Die Abscheidevorrichtung gemäß Figur 1 besteht im wesentlichen aus einem zylindrischen Gehäuse 10 mit einer Lufteintrittsöffnung 11 und einem darin angeordneten Leitapparat 12 welcher auch als Vortex-Generator bezeichnet werden kann. Dieser weist helixförmige Leitflächen auf, welche eine zylindrische Nabe umgeben. Das Gehäuse 10 kann mit dem Leitapparat 12 einstückig aufgebaut sein. Dem Gehäuse nachgeschaltet ist ein weiteres Gehäuse 13, das auf der Eintrittsseite eine kegelstumpfförmige Mantelfläche 14 aufweist, so dass ein Ringspalt 15 zwischen dem Gehäuse 10 und der Mantelfläche 14 entsteht. Auf der Luftaustrittseite des Gehäuses 13 ist ein weiterer kegelstumpfförmiger Gehäusekörper 16 angeordnet, auch zwischen diesem und dem Gehäuse 13 befindet sich ein Ringspalt 17. Die durch die Abscheidevorrichtung durchströmende Luft gelangt von der Lufteintrittsöffnung auf den Leitapparat 12, wird dort in eine Rotation versetzt und strömt zu der Eintrittsöffnung 18 des Gehäuses 13. Von dort gelangt die Luft durch den Gehäusekörper 16 hindurch zu der Luftaustrittsöffnung 19. Aufgrund der Rotationsbewegung der Luft werden mitgeführter Staub oder mitgeführte Partikel nach außen geschleudert und über den ersten Ringspalt 15 gemäß dem Pfeil 20 ausgetragen. Weitere noch in der Luft befindliche Partikel gelangen aufgrund der unverminderten Rotation der Luft ebenfalls im Gehäuse 13 zu dem Ringspalt 17 und werden auch dort gemäß Pfeil 21 aus dem Luftstrom entfernt.

Figur 2 zeigt eine Variante des in Figur 1 gezeigten Abscheiders. Der einzige Unterschied beseht darin, dass in der sogenannten zweiten Stufe des Abscheiders d. h. im Gehäuse 13 ein Kegeleinsatz 22 vorgesehen ist. Dieser kann über Stege 23 /24 mit dem Gehäuse verbunden sein. Der Kegeleinsatz hat die Aufgabe, die Luft und eventuell mitgeführte Partikel zielgerichtet an den Innenwandbereich der zweiten Stufe zu führen. Dieser Kegeleinsatz kann das Abscheideverhalten der Abscheidevorrichtung verbessern.

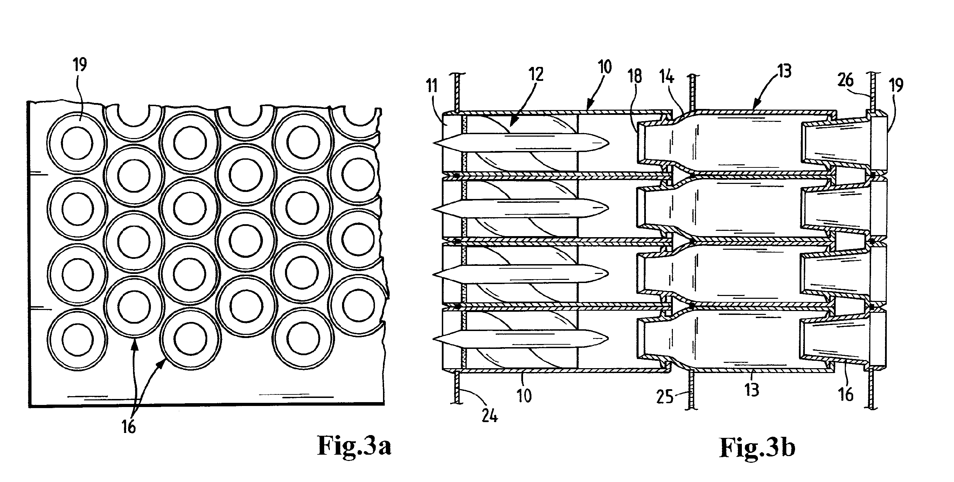

Die Figuren 3a und 3b zeigen eine Mehrzahl von Abscheidevorrichtungen, die in einem Array angeordnet sind. Die einzelnen Abscheidevorrichtungen 23 sind wie in der Draufsicht gemäß Figur 3a gezeigt, unmittelbar benachbart angeordnet. Das jeweilige Gehäuse 10 ist an einer Stirnwand 24 befestigt, dies bedeutet, dass die Stirnwand Bohrungen aufweist und die einzelnen Gehäuse in diese Bohrungen eingesteckt werden können. Parallel zu dieser Stirnwand verläuft eine mittlere Wand 25, diese weist ebenfalls Bohrungen auf in welchen die Gehäuse 13 fixiert werden. Den Abschluss bildet eine luftaustrittsseitig angeordnete Stirnwand 26, die zum Befestigen der Gehäusekörper 16 dient. Der Staubaustrag erfolgt innerhalb des hier nicht vollständig dargestellten Gehäuses, welches aus den beiden Stirnwänden 24 und 26 gebildet wird. Im unteren Bereich des Gehäuses, d. h. am Boden wird der Staub über entsprechende Staubaustragsöffnungen oder Ventile ausgetragen.

## Patentansprüche

1. Abscheidevorrichtung, insbesondere zur Abscheidung von Partikeln aus einem Luftstrom, umfassend eine erste Stufe mit wenigstens einem Fliehkraftabscheider, durch welchen das Fluid, entlang einem ersten Axialweg einströmt, wobei der Fliehkraftabscheider einen Leitapparat zur Erzeugung einer Drallbewegung des Fluids aufweist, **dadurch gekennzeichnet, dass** der ersten Stufe unmittelbar eine zweite Stufe nachgeordnet ist, welche ein im wesentlichen zylindrisches Gehäuse aufweist und im Bereich des Fluidaustritts ein Staubaustrag und ein konzentrisch angeordnetes und kegelstumpfförmiges Mittelrohr vorgesehen ist.

2. Abscheidevorrichtung nach Anspruch 1, **dadurch gekennzeichnet, dass** die zweite Stufe sich mit ihrer Eintrittsseite zumindest teilweise bis in die erste Stufe erstreckt.

3. Abscheidevorrichtung nach Anspruch 1 oder 2, **dadurch gekennzeichnet, dass** sich in der zweiten Stufe ein Kegeleinsatz zur Verbesserung des Abscheidegrades befindet.

4. Abscheidevorrichtung nach einem der folgenden Ansprüche, **dadurch gekennzeichnet, dass** die von der ersten Stufe abgeschiedenen Partikel und die von der zweiten Stufe abgeschiedenen Partikel, einem gemeinsamen Auffangbehälter zugeführt werden.

5. Abscheidevorrichtung nach einem der vorigen Ansprüche, **dadurch gekennzeichnet, dass** diese eine Mehrzahl von Fliehkraftabscheidern aufweist, welche in einem Array angeordnet sind.

6. Lufteinlass für einen Motor, **gekennzeichnet durch** die Anordnung einer Abscheidevorrichtung gemäß einem der Ansprüche 1-5.
